Europäisches Patentamt

European Patent Office

Office européen des brevets

(19)

(11) Veröffentlichungsnummer: **0 217 319**
**B1**

(12) **EUROPÄISCHE PATENTSCHRIFT**

(45) Veröffentlichungstag der Patentschrift: **22.08.90**

(51) Int. Cl.⁵: **B 60 N 2/46**

(21) Anmeldenummer: **86113317.1**

(22) Anmeldetag: **26.09.86**

(54) **Fahrgastsitz-Armlehne.**

(30) Priorität: **28.09.85 DE 8527684 u**

(43) Veröffentlichungstag der Anmeldung:
**08.04.87 Patentblatt 87/15**

(45) Bekanntmachung des Hinweises auf die
Patenterteilung:
**22.08.90 Patentblatt 90/34**

(84) Benannte Vertragsstaaten:
**BE DE FR GB IT NL SE**

(56) Entgegenhaltungen:
**DE-U-8 107 888**

(73) Patentinhaber: **Ignaz Vogel GmbH & Co KG,**
**Fahrzeugsitze**
**Kleinsteinbacher Strasse 42-44**
**D-7500 Karlsruhe 41-Stu (DE)**

(72) Erfinder: **Vogel, Ignaz, Dipl.-Ing.**
**Keinsteinbacher Strasse 44**
**D-7500 Karlsruhe 41 (DE)**

(74) Vertreter: **Trappenberg, Hans**
**Postfach 1909**
**D-7500 Karlsruhe 1 (DE)**

Courier Press, Leamington Spa, England.

## Beschreibung

Die Erfindung betrifft eine abklappbare Fahrgastsitz-Armlehne mit gepolsterter Armauflagefläche, deren Schwenkachse im Fügebereich zwischen Sitzpolster und Rückenlehne angeordnet ist, bestehend aus einem, im Gebrauchszustand von der Schwenkachse im wesentlichen nach oben strebenden Teil und einem, etwa parallel zu der belasteten Sitzfläche verlaufenden Armauflageteil.

Der Armauflageteil ist bei derartigen Armlehnen in aller Regel gepolstert, um zum einen Erschütterungen zu dämpfen und zum anderen aber auch die Berührung mit dem kalten Metall der Armlehne zu vermeiden.

Der im wesentlichen nach oben strebende Teil der Armlehne ist hingegen nicht gepolstert. Insbesondere dann, wenn dieser Teil auch noch abgekröpft ist, kann eine Verletzungsgefahr bei neben derartigen Sitzen stehenden oder gehenden Personen bestehen, da dieser Armlehnenteil etwa in Kniehöhe liegt, diese Personen sich also bei starkem Bremsen oder gar bei Unfällen an dem freiliegenden Metall verletzen können.

In abgeklapptem Zustand liegt der zuvor im wesentlichen nach oben strebende Teil etwa parallel zur unbelasteten Sitzfläche. Will ein Fahrgast, beispielsweise ein Kind, neben seiner Begleitperson auf dieser Fläche Platz nehmen, so sitzt er auf diesem kalten ungepolsterten Armlehnenteil. Auch beim Platznehmen beziehungsweise beim Herausrutschen aus den Sitzen kommt dieser Teil zumindest mit der Kleidung der Fahrgäste oder auch mit deren Körper in Berührung.

Um diese Nachteile zu beheben, also eine Armlehne anzugeben, die keine Verletzungsgefahr in sich birgt beziehungsweise für die Fahrgäste sowohl im Gebrauchszustand wie im abgeklappten Zustand komfortabel ist, wird nach der Erfindung vorgeschlagen, daß die Polsterung vom freien Ende der Armlehne bis zur Schwenkachse weitergeführt ist. Bevorzugt wird die Polsterung vom freien Ende der Armlehne bis zur Schwenkachse einstückig ausgeführt, um ein Einklemmen von Kleidungsstücken in Stoßflächen des Polsters zu vermeiden. Als zweckmäßig hat es sich hierbei erwiesen, daß die Polsterung im an die Armauflage anschließenden, zur Schwenkachse führenden Teil so ausgeführt ist, daß deren nach oben weisende Fläche bei abgeklappter Armlehne etwa mit der Sitzpolsterfläche parallel verläuft oder mit dem unbelasteten Sitzpolster etwa in einer Ebene liegt.

Bei einer derartigen Armlehnen-Ausführung ist sowohl in der Gebrauchslage der Armlehne dafür gesorgt, daß Verletzungen an dem nach oben strebenden Teil der Armlehne vermieden werden, wie auch, daß die Armlehne im abgeklappten Zustand für die Fahrgäste komfortabel ist.

Auf der Zeichnung ist ein Ausführungsbeispiel einer derartigen Armlehne schematisch dargestellt, und zwar zeigen:

Fig. 1 die Armlehne im Gebrauchszustand und

Fig. 2 die Armlehne im abgeklappten Zustand.

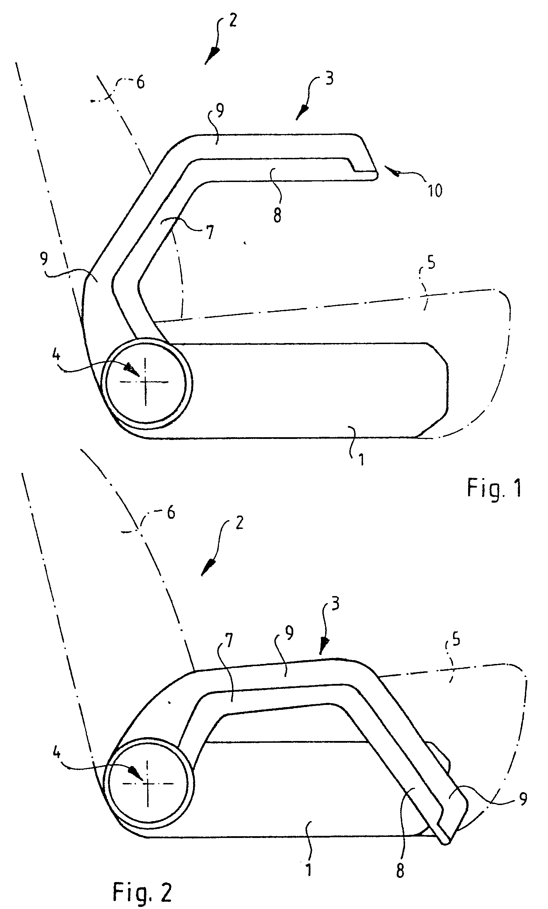

An der seitlichen Blende 1 eines Fahrgastsitzes 2 ist eine Armlehne 3 so angelenkt, daß deren Schwenkachse 4 im Fügebereich zwischen einem Sitzpolster 5 und einer Rückenlehne 6 (jeweils strichpunktiert eingezeichnet) leigt. Die Armlehne ist im Gebrauchszustand gebildet aus einem im wesentlichen nach oben strebenden Teil 7 und aus einem, etwa parallel zur Sitzfläche des Sitzpolsters 5 verlaufenden Armauflageteil 8. Im abgeklappten Zustand (Fig. 2) verläuft der Armlehnenteil 7 etwa parallel zur Fläche des Sitzpolsters 5.

Die Armlauflagefläche der Armlehne 3 ist mit einer Polsterung 9 versehen. Diese Polsterung 9 erstreckt sich in neuerungsgemäßer Weise von der Spitze 10 der Armlehne 3 über die Armauflagefläche hinweg bis zur Schwenkachse 4. Damit ist in der Gebrauchslage der Armlehne 3 (Fig. 1) vorgebeugt, daß sich Passagiere an dem im wesentlichen nach oben strebenden Teil 7 der Armlehne 3 verletzen könnten. Im abgeklappten Zustand der Armlehne 3 (Fig. 2) liegt der Armlehnenteil 7 etwa parallel zur Fläche des Sitzpolsters 5. Damit liegt auch dieser Teil der Polsterung 9 etwa in dieser Fläche, wodurch auch in diesem Zustand die Passagiere nicht mit dem unnachgiebigen kalten Metall der Armlehne 3 in Berührung kommen.

## Patentansprüche

1. Abklappbare Fahrgastsitz-Armlehne (3) mit gepolsterter Armauflagefläche, deren Schwenkachse (4) im Fügebereich zwischen Sitzpolster (5) und Rückenlehne (6) angeordnet ist, bestehend aus einem, im Gebrauchszustand von der Schwenkachse im wesentlichen nach oben strebenden Teil und einem, etwa parallel zu der belasteten Sitzfläche verlaufenden Auflageteil, dadurch gekennzeichnet, daß die Polsterung (9) vom freien Ende (10) der Armlehne (3) bis zur Schwenkachse (4) weitergeführt ist.

2. Fahrgastsitz-Armlehne nach Anspruch 1, dadurch gekennzeichnet, daß die Polsterung (9) einstückig ausgeführt ist.

3. Fahrgastsitz-Armlehne nach Anspruch 1 oder 2, dadurch gekennzeichnet, daß die Polsterung (9) im an die Armauflage anschließenden, zur Schwenkachse (4) führenden Teil (7) so ausgeführt ist, daß deren nach oben weisende Fläche bei abgeklappter Armlehne etwa mit der Sitzpolsterfläche parallel verläuft.

4. Fahrgastsitz-Armlehne nach Anspruch 3, dadurch gekennzeichnet, daß die Polsterung (9) bei abgeklappter Armlehne mit dem unbelasteten Sitzpolster (5) etwa in einer Ebene liegt.

## Revendications

1. Accoudoir rabattable (3) pour siège de passager qui comprend une surface d'appui rembourrée pour le bras, dont l'axe de pivotement (4) est disposé dans la région de l'intervalle entre le rembourrage (5) du siège et le dossier (6), et qui est constitué par une partie s'étendant pour l'essentiel vers le haut depuis l'axe de pivotement dans la position d'utilisation et par une partie d'appui s'étendant de manière à peu près parallèle à la surface d'assise chargée, caractérisé par le fait que le rembourrage (9) s'étend continûment depuis l'extrémité libre (10) de l'accoudoir (3) jusqu'à l'axe de pivotement (4).

2. Accoudoir pour siège de passager selon la revendication 1, caractérisé par le fait que le rembourrage (9) est réalisé en une seule pièce.

3. Accoudoir pour siège de passager selon la revendication 1 ou 2, caractérisé par le fait que le rembourrage (9), dans sa partie (7) qui se raccorde à l'appui -bras et qui conduit à l'axe de pivotement (4), est réalisé de telle manière que sa surface dirigée vers le haut s'étende à peu près parallèlement à la surface rembourrée du siège lorsque l'accoudoir est rabattu.

4. Accoudoir pour siège de passager selon la revendication 3, caractérisé par le fait que le rembourrage (9) est situé à peu près dans le même plan que le rembourrage non chargé (5) du siège lorsque l'accoudoir est rabattu.

## Claims

1. Tiltable passenger seat arm rest (3) with an upholstered arm rest surface, the tilting axis (4) of which is situated in the region where the seat cushion (5) and the backrest (6) meet, comprising a part which extends, in the position for use, from the tilting axis substantially upwards, and a part extending approximately parallel to the loaded seat surface, characterised in that the upholstering (9) extends from the free end (10) of the arm rest (3) to the tilting axis (4).

2. Passenger seat arm rest according to claim 1 characterised in that the upholstering (9) is made in one piece.

3. Passenger seat arm rest according to claim 1 or 2 characterised in that the upholstering (9) in the part (7) forming the continuation of the arm support and extending towards the tilting axis (4) is so made that in the lowered position its upwardly facing surface extends approximately parallel to the surface of the seat cushion.

4. Passenger seat arm rest according to claim 3 characterised in that in the lowered position the upholstering (9) lies approximately in the same plane as the unloaded seat cushion (5).

Fig. 1

Fig. 2